Europäisches Patentamt

European Patent Office

Office européen des brevets

(19)

(11) Veröffentlichungsnummer : **0 186 784 B1**

(12)

# EUROPÄISCHE PATENTSCHRIFT

(45) Veröffentlichungstag der Patentschrift :
01.02.89

(21) Anmeldenummer : 85114997.1

(22) Anmeldetag : 26.11.85

(51) Int. Cl.⁴ : **F 16 H 57/02**

(54) Vorrichtung zur Be- und Entlüftung eines Gehäuses.

(30) Priorität : 29.11.84 DE 3443502

(43) Veröffentlichungstag der Anmeldung :
09.07.86 Patentblatt 86/28

(45) Bekanntmachung des Hinweises auf die Patenterteilung : 01.02.89 Patentblatt 89/05

(84) Benannte Vertragsstaaten :
DE FR GB IT

(56) Entgegenhaltungen :
EP--A-- 0 076 156
DD--C-- 134 560
DE--A-- 3 140 438
DE--U-- 7 329 116

(73) Patentinhaber : **BAYERISCHE MOTOREN WERKE
Aktiengesellschaft
Postfach 40 02 40 Petuelring 130 - AJ-36
D-8000 München 40 (DE)**

(72) Erfinder : **Königseder, Uwe
Breslauer-Strasse 13
D-8266 Töging/Inn (DE)**

(74) Vertreter : **Dexheimer, Rolf
Bayerische Motoren Werke Aktiengesellschaft Postfach 40 02 40 Petuelring 130 - AJ-21
D-8000 München 40 (DE)**

**Beschreibung**

Die Erfindung betrifft eine Vorrichtung zur Be- und Entlüftung eines Gehäuses, insbesondere eines Getriebegehäuses, mit den im Oberbegriff des Hauptanspruchs angegebenen Merkmalen.

Eine derartige Vorrichtung ist schon mehrfach, beispielsweise durch das DE-U-7 329 116 bekannt. Die zur Getriebeentlüftung vorgesehene Vorrichtung weist eine Hülse auf, die in eine Gehäuseöffnung einschraubbar ist. Die zentrale durchgehende Öffnung der Hülse ist von einem Filter aus Sintermaterial verschlossen, der gegenüber Öl weitgehend undurchlässig ist. Um den Druck vor dem Filter zu vermindern, ist in dem äußeren Stirnbereich der Hülse ein Stopfen eingeschraubt, der eine zum Innendurchmesser der Hülse wesentliche kleinere Entlüftungsöffnung aufweist. Die Anordnung des Filtereinsatzes in einer Schraube hat den Nachteil, daß die für den Druckausgleich wirksame Querschnittsfläche eingeengt ist. Ein Verschmutzen des Filters, beispielsweise durch Schmutzpartikel oder Abrieb im Getriebeöl, ist dadurch leicht möglich und kann die Getriebeentlüftung verhindern. Durch Druckanstieg im Gehäuseinneren können jedoch Bauteile, beispielsweise die Dichtlippen von Dichtungsringen, beschädigt werden, wodurch ein Ölverlust auftreten kann. Um die mit einem radialen Bund versehene Hülse in die Gehäuseöffnung einschrauben und befestigung zu können, ist im äußeren Bereich der Gehäuseöffnung ein Anguß erforderlich, der zu bearbeiten ist. Ähnliche Entlüftungsöffnungen sind in der DD-B-134 560 und in der DE-A 31 40 438 beschrieben, die prinzipiell die gleichen Nachteile aufweisen.

Der Erfindung liegt die Aufgabe zugrunde, eine Vorrichtung zur Be- und Entlüftung eines Gehäuses nach dem Oberbegriff des Hauptanspruchs anzugeben, die neben einer Gehäusebe- und Entlüftung weitere Aufgaben erfüllt. Außerdem soll die Vorrichtung kostengünstig zu fertigen sein, nicht störend wirken und nur einen geringen Bauaufwand erfordern.

Diese Aufgabe ist durch die im Kennzeichen des Hauptanspruchs angegebenen Merkmale gelöst. Besonders vorteilhaft ist, daß der Stützring ein in der Gehäuseöffnung angeordnetes Bauteil lagert bzw. stützt und gleichzeitig eine Be- und Entlüftung des Gehäuseinneren sicherstellt. Der Stützring aus Sintermaterial kann kostengünstig gefertigt werden und nahezu jedes Stahlteil ersetzen. Eine zerspanende Nachbearbeitung des Stützringes nach dem Sintern ist nur in seltenen Fällen erforderlich. Durch die Anordnung des Stützkörpers in der Gehäuseöffnung wirkt dieser nicht störend. Ein zu bearbeitender Gehäuseanguß ist nicht erforderlich. Der Stützring kann auch ein verhältnismäßig groß dimensioniertes Bauteil sein, bei dem eine den Gasdurchtritt verhindernde Verschmutzung kaum zu erwarten ist.

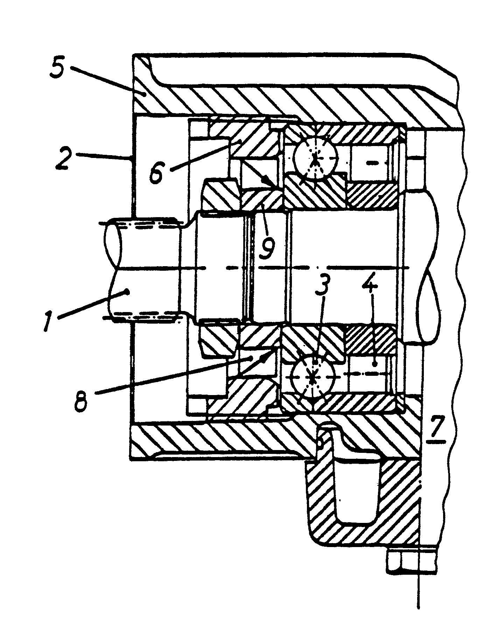

In der Zeichnung ist die Lagerung einer Welle 1 in einer Gehäuseöffnung 2 im Schnitt dargestellt.

Die Welle 1 kann sich dabei über zwei Wälzlager, ein Kugellager 3 und ein Tonnenlager 4, an dem Gehäuse 5 abstützen. Die beiden Außenringe der Wälzlager werden von einem als Gewindering 6 ausgebildeten Dichtkörper in ihrer Lage festgelegt, wobei der Gewindering 6 mit seinem Außengewinde in ein in der Gehäuseöffnung 2 ausgebildetes Innengewinde einschraubbar ist. Auf der im Gehäuseinneren 7 liegenden Stirnseite des Gewinderinges 6 ist eine Stützfläche ausgebildet, die beim Festlegen der Wälzlager an einer Wälzlagerstirnseite anliegt. Von der Innenseite des Gewinderinges 6 ist ein Dichtungsring 8 aufgenommen, der mit seiner Dichtungslippe mit der Außenseite eines Druckringes 9 zusammenwirkt, der zur Druckübertragung bei der Festlegung der Wälzlagerinnenringe dient. Das in der Zeichnung dargestellte Gehäuse 5 ist somit allseits umschlossen. Im Gehäuseinneren 7 sind zur Momentenübertragung in Öl laufende Zahnräder angeordnet. Zur Entlüftung z. B. der im Betrieb im Gehäuseinneren 7 entstehenden Öldämpfe ist der als Gewindering 6 ausgebildete Dichtkörper aus einem gasdurchlässigen, porösen Sintermetall hergestellt. Der Gewindering 8 ermöglicht dadurch einen Gasaustausch zwischen den Gehäuseinneren 7 und der Umgebung. Gegenüber Flüssigkeiten ist der Gewindering 6 jedoch weitgehend undurchlässig. Beim Abkühlen des Gehäuses 5 kann über den Gewindering 6 von außen Luft einströmen, nicht aber Wasser oder Öl. In der Luft mitgeführtes Öl wird beim Ein- oder Ausströmen von dem Gewindering 6 aufgesaugt. Bei ungünstigen Verhältnissen ist es möglich, daß sich über einen größeren Zeitraum an der äußeren Seite des Gewinderinges 6 einige Tropfen Öl ansammeln, die bei nach oben gerichteter Gehäuseöffnung 2 während der Gehäuseabkühlung in das Gehäuseinnere 7 zurückgesaugt werden. Bei dem in der Zeichnung dargestellten Ausführungsbeispiel sind in der Stützfläche und an der äußeren Stirnseite des Gewinderinges 6 mehrere radial verlaufende Ausnehmungen ausgebildet. Ein Ölaustritt über das Außen- bzw. Innengewinde ist nicht festgestellt worden. Bei ungünstigen Verhältnissen kann das Außen- bzw. Innengewinde auch als Feingewinde ausgebildet und/oder mit einem Dichtungsmittel versehen sein. Der Dichtungskörper ist in unterschiedlicher Form universell einsetzbar und keineswegs auf den Anwendungsfall im Ausführungsbeispiel beschränkt.

**Patentansprüche**

1. Vorrichtung zur Be- und Entlüftung eines Gehäuses (5), insbesondere eines Getriebegehäuses, mit einem in einer Gehäuseöffnung (2) angeordneten gasdurchlässigen Dichtkörper (Gewindering 6) aus porösem Sintermaterial, der die Gehäuseöffnung (2) gegen Flüssigkeiten weitgehend undurchlässig verschließt, dadurch gekennzeichnet, daß der Dichtkörper als Stützring (Gewindering 6) ausgebildet ist, der wenigstens ein weiteres in der Gehäuseöffnung (2) angeordnetes Bauteil (Dichtungsring 8, Wälzlageraußenring) festlegt, das an der Innenseite des Stützringes (Gewindering 6) befestigt ist oder das mit einer Stirnseite des Stützringes (Gewindering 6) zusammenwirkt.

2. Vorrichtung nach Anspruch 1, dadurch gekennzeichnet, daß der Stützring (Gewindering 6) eine in der Gehäuseöffnung (2) gelagerte Stange oder Welle (1) umgibt und an der Innenseite des Stützringes (Gewindering 6) eine Aufnahme für einen Dichtungsring (8) ausgebildet ist.

3. Vorrichtung nach Anspruch 1, dadurch gekennzeichnet, daß der Stützring ein Gewindering (6) ist, der mit seinem Außengewinde in ein in der Gehäuseöffnung (2) ausgebildetes Innengewinde einschraubbar ist.

4. Vorrichtung nach Anspruch 1 oder 2, mit einem in der Gehäuseöffnung (2) angeordneten Wälzlager (Kugellager 3, Tonnenlager 4), an dem eine Welle (1) gelagert ist, dadurch gekennzeichnet, daß der Stützring (Gewindering 6) auf einer Stirnseite eine Stützfläche aufweist, die mit der Stirnseite des Wälzlageraußenringes (Kugellager 3) zur Festlegung des Wälzlageraußenringes (Kugellager 3) zusammenwirkt.

## Claims

1. Apparatus for the supply and removal of air to and from a housing (5), especially a gear housing, comprising a gas-permeable sealing member (threaded ring 6) of porous sintered material, arranged in a housing opening (2), which seals the housing opening (2) from fluids in a substantially impermeable manner, characterised in that the sealing member is constructed as a support ring (threaded ring 6) which secures at least one further component (sealing ring 8, roller bearing outer ring) arranged in the housing opening (2), which component is attached to the inner side of the support ring (threaded ring 6) or which co-operates with an end face of the support ring (threaded ring 6).

2. Apparatus according to Claim 1, characterised in that the support ring (threaded ring 6) surrounds a rod or shaft (1) arranged in the housing opening (2), and that on the inner side of the support ring (threaded ring 6) a mounting is provided for a sealing ring (8).

3. Apparatus according to Claim 1, characterised in that the support ring is a threaded ring (6) which is capable of being screwed with its external thread into an internal thread formed in the housing opening (2).

4. Apparatus according to Claim 1 or 2 having a roller bearing (ball bearing 3, barrel-shaped roller bearing 4) arranged in the housing opening (2) with a shaft (1) supported by the bearing, characterised in that the support ring (threaded ring 6) has a support surface on one end face which co-operates with the end face of the roller bearing outer ring (ball bearing 3) to secure the roller bearing outer ring (ball bearing 3).

## Revendications

1. Dispositif d'aération et de désaération d'un carter (5), en particulier d'un carter de transmission, avec un corps d'étanchéité (Anneau fileté 6) perméable aux gaz, qui est disposé dans un orifice de carter (2) et qui obture de manière notablement imperméable l'orifice de carter, vis-à-vis des gaz, caractérisé en ce que le corps d'étanchéité est configuré en anneau d'appui (Anneau fileté 6), qui fixe au moins une autre partie constructive (Anneau d'étanchéité 8, anneau extérieur de palier à roulement) qui est disposé dans l'orifice de carter (2), cette partie constructive étant fixée sur le côté intérieur de l'anneau d'appui (Anneau fileté 6) ou bien collaborant avec un côté frontal de l'anneau d'appui (Anneau fileté 6).

2. Dispositif selon la revendication 1, caractérisé en ce que l'anneau d'appui (Anneau fileté 6) entoure une tige ou bien un arbre (1) qui est disposé dans l'orifice de carter (2) et qu'un logement destiné à un anneau d'étanchéité (8) est configuré sur le côté intérieur de l'anneau d'appui (Anneau fileté 6).

3. Dispositif selon la revendication 1, caractérisé en ce que l'anneau d'appui est un anneau fileté (6), qui peut être introduit par vissage, avec son filetage extérieur, dans un filetage intérieur qui est configuré dans l'orifice de carter.

4. Dispositif selon la revendication 1 ou 2, avec un palier à roulement (Roulement à billes 3, roulement à rotule 4) disposé dans l'orifice de carter (2), sur lequel est guidé un arbre (1), caractérisé en ce que l'anneau d'appui (Anneau fileté 6) possède sur le côté frontal, une surface d'appui, qui collabore avec le côté frontal de l'anneau extérieur du palier à roulement (Roulement à billes 3), pour fixer l'anneau extérieur du palier à roulement (Roulement à billes 3).